# EUROPÄISCHE PATENTANMELDUNG

(11) **EP 4 790 281 A1**
(43) Veröffentlichungstag der Anmeldung: **12.08.2026**
(21) Anmeldenummer: 26156406.6
(22) Anmeldetag: 04.02.2026
(51) Int. Cl.: F16K 11/07, A47J 31/46

(54) **MEHRWEGEVENTIL**

(30) Priorität: 11.02.2025 PL 13259425 U
(71) Anmelder: BSH Hausgeräte GmbH, 81739 München (DE)
(72) Erfinder: Einsiedler, Thomas, 83278 Traunstein (DE); Reichel, Thomas, 83278 Traunstein (DE)

(57) **Zusammenfassung**

Die Erfindung betrifft ein Mehrwegeventil, insbesondere zur Steuerung der Wasserflussrichtung in Kaffeeautomaten, das einen starren Körper (2) aufweist, der von innen eine zylindrische Innenwand (16) mit einer Stufe (13) aufweist, die einen geometrisch begrenzten Raum bildet, in den eine bewegliche Schieber-Baugruppe mit einer einen Schieber (1) umgebenden Distanzhülsenanordnung (5,6) zusammen mit Dichtungen (10,11,12) eingeschoben ist, wobei diese Schieber-Baugruppe das Innere des Körpers (2) in drei voneinander getrennte Kammern (7,8,9) unterteilt und die Distanzhülsenanordnung (5,6) sich mit einem Ende an der an der Innenwand (16) ausgebildeten Stufe (13) abstützt, während ein anderes Ende der Distanzhülsenanordnung (5,6) im Körper (1) durch einen Körperdeckel (3) arretiert ist, wobei der Körperdeckel (3) eine zentrische Öffnung (14) aufweist, durch die ein verschiebbarer Schieberschaft (15) aus dem Körper (2) nach außen geführt ist, wobei der Schieber (1) einen durchgehenden Kanal (4) aufweist, der geeignet ist, eine dichte Verbindung zwischen zwei der Kammern (7,8,9) in Abhängigkeit von der Einschubtiefe des Schiebers (1) in den Körper (2) herzustellen, wobei eine Einströmöffnung in den Kanal (4) und eine Ausströmöffnung aus dem Kanal (4) in Bezug auf eine Einschubrichtung des Schiebers (1) versetzt angeordnet sind.

## Beschreibung

Gegenstand der Anmeldung ist ein Mehrwegeventil mit einem Schieber zur Steuerung der Durchflussrichtung in Steuer- und Regelsystemen von Haushaltsgeräten, insbesondere in Wasserverteilungssystemen in Kaffeeautomaten.

Mehrwegeventile in Kaffeemaschinen spielen eine Schlüsselrolle bei der Steuerung des Wasserflusses und des Drucks in den verschiedenen Phasen des Kaffeebrühprozesses. Sie werden eingesetzt, um Wasser zu verschiedenen Elementen der Kaffeemaschine zu leiten und zu steuern, wie z. B. zur Brüheinheit, in der heißes Wasser unter Druck durch gemahlene Kaffeebohnen fließt, und/oder zum Boiler mit Heizelement oder zum Dampfsystem, das u. a. zum Aufschäumen von Milch verwendet wird.

In der Praxis erfüllt das Mehrwegeventil Funktionen wie u. a. das Umschalten zwischen dem Brühvorgang und dem Milchaufschäumen, die Regulierung des Drucks während des Brühens oder auch die Ermöglichung der Reinigung einzelner Teile der Kaffeemaschine. Durch seinen Einsatz werden Kaffeeautomaten effizienter und ihre Bedienung präziser und komfortabler. Dies ist besonders wichtig bei professionellen Kaffeemaschinen, bei denen Geschwindigkeit, präzise Einstellungen und Zuverlässigkeit im Kontext der Zubereitung von qualitativ hochwertigem Kaffee von entscheidender Bedeutung sind.

Aus der europäischen Patentschrift EP3556269A1 ist ein Mehrwegeventil für eine Vorrichtung zur Zubereitung von Heißgetränken bekannt, insbesondere zur Verteilung von heißem Wasser und/oder heißem Dampf in Kaffeeautomaten, das eine Einlassleitung mit einer Einlassöffnung und mindestens einer Auslassöffnung sowie ein Gehäuse mit einem Scheibenträger und einer Bodenfläche mit Öffnungen und einem Innenraum zur Aufnahme von befestigenden keramischen Ventilscheiben umfasst, die in dichtem Eingriff zueinander angeordnet sind und relativ zueinander verstellbar sind, nämlich mindestens eine feste Verteilerscheibe und mindestens eine drehverstellbare Steuerscheibe, bezogen auf das Gehäuse, das einen Separator zur Aufteilung der Einlassleitung in mehrere Einlasskanäle und zur Aufteilung und Verteilung des Heißwasser- und/oder Heißdampfstroms in Teilströme zur Versorgung des Innenraums des Gehäuses aufweist, wobei der Separator außerhalb des Innenraums angeordnet ist.

Der Hauptnachteil dieser Art von Ventil ist sein komplizierter Aufbau, was hohe Produktionskosten verursacht. Auch die großen Abmessungen des Ventils führen zu Einschränkungen bei der Konstruktion von kompakten Kaffeemaschinen.

Das Mehrwegeventil weist gemäß der vorliegenden Anmeldung einen starren Körper auf, der von innen eine zylindrische Innenwand mit einer Stufe hat, die einen geometrisch begrenzten Raum bildet, in den eine bewegliche Schieber-Baugruppe mit einer den Schieber (1) umgebenden Distanzhülse zusammen mit Dichtungen eingeschoben ist, wobei diese Baugruppe das Innere des Körpers in drei voneinander getrennte Kammern unterteilt, sodass kein Wasser unkontrolliert zwischen den Kammern fließt. Die Distanzhülse der Schieber-Baugruppe stützt sich dabei mit einem Ende an der an der Innenwand ausgebildeten Stufe ab, während das andere Ende der Distanzhülse im Körper durch einen Körperdeckel blockiert ist, der eine zentrische Öffnung aufweist, durch die ein verschiebbarer Schieberschaft aus dem Körper nach außen geführt ist, wobei der Schieber einen durchgehenden, insbesondere in einer vorteilhaften Weiterbildung schrägen, Kanal aufweist, der geeignet ist, eine dichte Verbindung zwischen zwei Kammern in Abhängigkeit von der Einschubtiefe des Schiebers in den Ventilkörper herzustellen. Dadurch können insbesondere Nachteile der bekannten Ventile überwunden oder zumindest verringert werden.

Erfindungsgemäß sind eine Einströmöffnung in den Kanal und eine Ausströmöffnung aus dem Kanal in Bezug auf eine Einschubrichtung des Schiebers versetzt angeordnet. Dadurch können vorteilhaft entlang der Einschubrichtung hintereinander angeordnete getrennte Kammern durch den Kanal besonders einfach verbunden werden.

Vorteilhafterweise ist der durchgehende Kanal gegenüber der Einschubrichtung des Schiebers schräg ausgebildet. Dies ermöglich eine besonders strömungsgünstige Ausgestaltung des Mehrwegeventils.

Vorteilhafterweise ist der Schieber aus Kunststoff gefertigt. Er kann im Spritzgussverfahren für thermoplastische Kunststoffe hergestellt werden, was die Produktionskosten des Ventils senkt.

Vorteilhafterweise besteht die Distanzhülse aus einer Distanzhülse und einer weiteren Distanzhülse, die mittels einer Dichtung voneinander getrennt sind, was die Produktion des Ventils vereinfacht.

Vorteilhafterweise ist jede der Dichtungen aus einem hochtemperaturbeständigen Elastomer gefertigt und hat die Form eines O-Rings. Die Verwendung von standardmäßigen, auf dem Markt allgemein verfügbaren O-Ring-Dichtungen senkt die Materialkosten und somit die Produktionskosten.

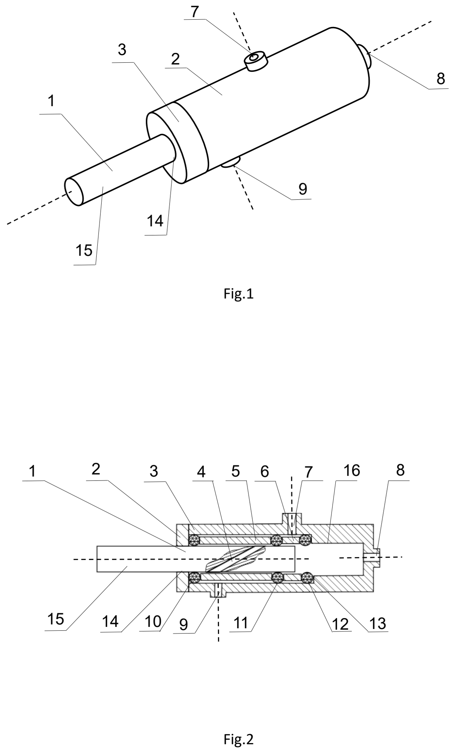

Das Mehrwegeventil ist in der Zeichnung dargestellt, in der
Fig. 1 das Ventil in einer perspektivischen Ansicht,
Fig. 2 das Ventil in einer Längsschnittansicht mit dem Schieber in der ersten Position,

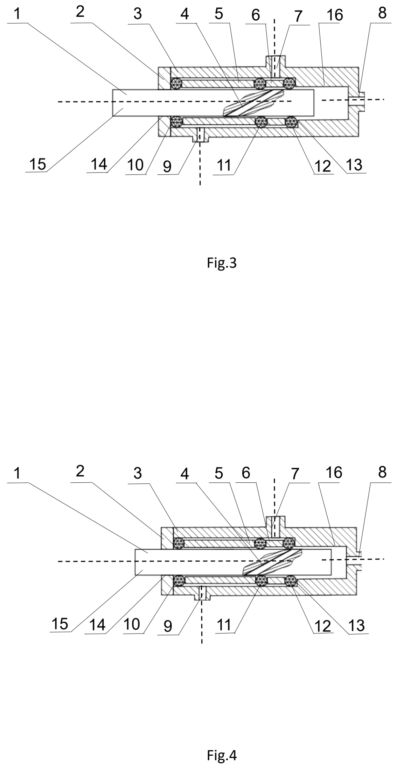

Fig. 3 das Ventil in einer Längsschnittansicht mit dem Schieber in der zweiten Position und
Fig. 4 das Ventil in einer Längsschnittansicht mit dem Schieber in der dritten Position zeigt.

Das Mehrwegeventil weist einen starren, zylinderförmigen Körper 2 auf, der von innen eine zylindrische Innenwand 16 mit einer Stufe 13 hat, die einen geometrisch begrenzten Raum bildet, in den eine bewegliche Schieber-Baugruppe 1 mit einer den Schieber 1 umgebenden Distanzhülse 5, 6 zusammen mit den Dichtungen 10, 11, 12 eingeschoben ist, wobei diese Baugruppe das Innere des Körpers 2 in drei voneinander getrennte Kammern 7, 8, 9 unterteilt und deren Distanzhülse 5, 6 sich mit einem Ende an der an der Innenwand 16 ausgebildeten Stufe 13 abstützt, während das andere Ende der Distanzhülse 5, 6 im Körper 1 durch einen Körperdeckel 3 blockiert ist, der eine zentrische Öffnung 14 aufweist, durch die ein verschiebbarer Schieberschaft 15 aus dem Körper 2 nach außen geführt ist, wobei der Schieber 1 einen durchgehenden schrägen Kanal 4 aufweist, der geeignet ist, eine dichte Verbindung zwischen zwei Kammern 7, 8, 9 in Abhängigkeit von der Einschubtiefe des Schiebers 1 in den Körper 2 herzustellen. Jedes der Ventilelemente mit Ausnahme der Dichtungen ist aus Kunststoff gefertigt, hergestellt im Spritzgussverfahren für thermoplastische Kunststoffe. Die Dichtungen 10, 11, 12 hingegen sind aus einem hochtemperaturbeständigen Elastomer gefertigt und haben die Form eines O-Rings. In Abhängigkeit von der Position des Schafts 15 relativ zum Körper 2 erreicht das Ventil verschiedene Kombinationen von Verbindungen der Kammern 7, 8, 9, wobei in der ersten Position, in der der Schaft 15 in der am weitesten ausgefahrenen Position aus dem Körper 2 ist, ein Fluss ausschließlich zwischen den Kammern 7 und 8 sichergestellt ist, in der zweiten, mittleren Position ein Fluss ausschließlich zwischen den Kammern 7 und 9 möglich ist, während in der dritten Position, in der sich der Schaft 15 in der am weitesten eingefahrenen Position im Körper(2 befindet, ein Fluss zwischen der Kammer 8 und 9 sichergestellt ist.

### BEZUGSZEICHENLISTE

- 1.: Schieber
- 2.: Körper
- 3.: Deckel
- 4.: schräger Kanal
- 5.: erste Distanzhülse
- 6.: zweite Distanzhülse
- 7.: erste Kammer
- 8.: zweite Kammer
- 9.: dritte Kammer
- 10.: Dichtung der ersten Kammer
- 11.: Dichtung der ersten und zweiten Kammer
- 12.: Dichtung der zweiten und dritten Kammer
- 13.: Stufe
- 14.: Öffnung
- 15.: Schaft
- 16.: Innenwand

## Patentansprüche

1. Mehrwegeventil, insbesondere zur Steuerung einer Wasserflussrichtung in Kaffeeautomaten, das einen starren Körper (2) aufweist, der innen eine zylindrische Innenwand (16) mit einer Stufe (13) aufweist, die einen geometrisch begrenzten Raum bildet, in den eine bewegliche Schieber-Baugruppe mit einer einen Schieber (1) umgebenden Distanzhülsenanordnung (5,6) zusammen mit Dichtungen (10, 11, 12) eingeschoben ist, wobei diese Schieber-Baugruppe das Innere des Körpers (2) in drei voneinander getrennte Kammern (7, 8, 9) unterteilt und die Distanzhülsenanordnung (5,6) sich mit einem Ende an der an der Innenwand (16) ausgebildeten Stufe (13) abstützt, während ein anderes Ende der Distanzhülsenanordnung (5,6) im Körper (1) durch einen Körperdeckel (3) arretiert ist, wobei der Körperdeckel (3) eine zentrische Öffnung (14) aufweist, durch die ein verschiebbarer Schieberschaft (15) aus dem Körper (2) nach außen geführt ist, wobei der Schieber (1) einen durchgehenden Kanal (4) aufweist, der geeignet ist, eine dichte Verbindung zwischen zwei der Kammern (7, 8, 9) in Abhängigkeit von der Einschubtiefe des Schiebers (1) in den Körper (2) herzustellen, wobei eine Einströmöffnung in den Kanal (4) und eine Ausströmöffnung aus dem Kanal (4) in Bezug auf eine Einschubrichtung des Schiebers (1) versetzt angeordnet sind.

2. Mehrwegeventil nach Anspruch 1, **dadurch gekennzeichnet, dass** der durchgehende Kanal (4) gegenüber der Einschubrichtung des Schiebers (1) schräg ausgebildet ist.

3. Mehrwegeventil nach Anspruch 1 oder 2, **dadurch gekennzeichnet, dass** der Schieber (1) aus Kunststoff gefertigt ist.

4. Mehrwegeventil nach einem der vorhergehenden Ansprüche, **dadurch gekennzeichnet, dass** die Distanzhülsenanordnung (5, 6) aus einer ersten Distanzhülse (5) und einer zweiten Distanzhülse (6) besteht, die mittels der Dichtung (11) voneinander getrennt sind.

5. Mehrwegeventil nach einem der vorhergehenden Ansprüche, **dadurch gekennzeichnet, dass** jede der Dichtungen (10, 11, 12) aus einem hochtemperaturbeständigen Elastomer gefertigt ist und die Form eines O-Rings hat.

6. Kaffeeautomat, aufweisend ein Mehrwegeventil nach einem der Ansprüche 1 bis 5.
